# EUROPÄISCHE PATENTANMELDUNG

(11) **EP 1 498 851 A1**
(43) Veröffentlichungstag der Anmeldung: **19.01.2005**
(21) Anmeldenummer: 03015607.9
(22) Anmeldetag: 15.07.2003
(51) Int. Cl.: G06T 17/00, G06T 15/70

(54) **Bestimmung einer dreidimensionalen Form eines Körpers, insbesondere einer anatomischen Struktur, aus zweidimensionalen Projektionsbildern**

(71) Anmelder: BrainLAB AG, 85551 Kirchheim/Heimstetten (DE)
(72) Erfinder: Lachner, Rainer Dr., 85586 Poing/Angelbrechting (DE); Feilkas, Thomas, 85567 Grafing (DE); Seifferth, Falko, 85604 Zorneding (DE); Vilsmeier, Stefan, 6330 Kufstein (AT)
(74) Vertreter: Schwabe - Sandmair - Marx

(57) **Zusammenfassung**

Die Erfindung betrifft ein Verfahren zur Bestimmung einer dreidimensionalen Form eines Körpers, insbesondere einer anatomischen Struktur, aus zweidimensionalen Projektionsbildem mit den folgenden Schritten:
- Erstellen von mindestens einem, vorzugsweise zwei oder mehreren Projektionsbildern des Körpers,
- Erstellen von entsprechenden Modell-Projektionsbildern aus einem generischen Modell des Körpers,
- Eingeben der Körper-Projektionsbilder und des Modells in eine computergestützte Verarbeitungseinheit,
- Anpassung des generischen Modells an den Körper, wobei eine Anpassung der Form und, wenn notwendig, der Position des generischen Modells durchgeführt wird, und wobei die Beurteilung der Übereinstimmung des generischen Modells mit dem Körper nur auf zweidimensionaler Ebene, nämlich durch den Vergleich der Bildinhalte der Körper-Projektionsbilder mit den Modell-Projektionsbildern erfolgt, und
- Bestimmung der dreidimensionalen Form des Körpers aus dem angepassten generischen Modell.

## Beschreibung

Die Erfindung betrifft die Bestimmung einer dreidimensionalen Form eines Körpers, insbesondere einer anatomischen Struktur, aus zweidimensionalen Projektionsbildern. Sie betrifft insbesondere das technische Gebiet der Bilderstellung für anatomische Strukturen, um medizinische bzw. chirurgische Eingriffe visuell zu unterstützen. Dabei wird mit Hilfe einer computergestützten, medizinischen Navigation sowohl die Behandlung durch visuelle Hilfen für den Behandelnden unterstützt, als auch die präoperative Behandlungsplanung. Ein solches Navigationssystem ist beispielsweise aus der DE 196 39 615 C2 bekannt.

Computergestützte, stereotaktische Systeme, die mit Hilfe von Körperstrukturdaten arbeiten, welche aus Tomographie-Erfassungssystemen erhalten wurden und welche mit Unterstützung von vor Ort erstellten Röntgenbildern arbeiten, sind beispielsweise aus der US 4,791,934 und der US 5,799,055 bekannt. Eine Operationsunterstützung durch Röntgenbildaufnahmen wird wiederum beispielsweise in den US-Patenten 5,967,982; 5,772,594 und 5,784,431 erörtert.

Wenn eine genau arbeitende medizinische Navigation zur Verfügung gestellt werden soll, wird gemäß dem derzeitigen Stand der Technik noch immer unter Zuhilfenahme von Körperstrukturdaten gearbeitet, die zum Beispiel aus Schichtbild-Erfassungssystemen stammen, wie Computertomographiegeräten oder Kernspintomographiegeräten. Der zu behandelnde Patient wird dabei vor Ort positionell gegenüber den vorher ermittelten Bilddaten registriert, und Operationsinstrumente werden dann virtuell zu den Bilddaten in gleicher Relation wie zum realen Patienten dargestellt, um die Körperstrukturdaten oder möglicherweise auch Röntgenbilddaten für den Chirurgen im Operationsraum nutzbar zu machen.

Der Nachteil solcher Verfahren, bei denen extra für die Navigation im Rahmen einer Behandlung Schichtbildaufnahmen (CT, MR) oder Röntgenbilder erstellt werden, liegt einerseits in der Strahlenbelastung für den Patienten, die dabei entsteht, und andererseits in dem hohen Kostenaufwand, da solche Geräte sowohl in der Anschaffung als auch in der Wartung und im Betrieb sehr teuer sind.

Es ist versucht worden, Systeme zu entwickeln, die sich ohne vorab separat erfasste Körperstrukturdaten des Patienten einsetzen lassen, beispielsweise auf der Basis von statistischen Modellen von Bilddatensätzen für Körperstrukturen. Jedoch mangelt es solchen Systemen an der erforderlichen Genauigkeit für den jeweils zu behandelnden Patienten.

Die DE 100 37 491 A1 und die WO 99/59106 beschreiben Verfahren zur Bereitstellung von 3D-Informationen unter Zuhilfenahme von Fluoro-Aufnahmen. Der Ausgangspunkt ist bei allen Verfahren das Erstellen von Durchleuchtungsaufnahmen des Patienten, bzw. der gewünschten Struktur. Hierbei wird ein Lokalisationssystem benutzt um eine räumliche Information mit den Aufnahmen zu erhalten. Die DE 100 37 491 A1 verwendet initial zwei Fluoro-Bilder um daraus ein grobes 3D-Modell zu rekonstruieren. Weitere Aufnahmen aus unterschiedlichen Winkeln werden verwendet, um das Modell noch genauer zu spezifizieren. Gemäß der WO 99/59106 werden im allgemeinen mindestens drei Fluoro-Aufnahmen des Patienten gemacht. Diese sind anterior-posterior, lateral und anterior-posterior mit zurückgeneigtem Kopf. Zusätzlich zu den Durchleuchtungsaufnahmen werden auch Fotographien des Patienten verwendet. Die Modellanpassung findet bei diesem Stand der Technik aufwendig im dreidimensionalen Raum statt.

Aus der WO 01/22368 A1 ist eine Technik bekannt, durch die ein dreidimensionales Modell unter Verwendung von Fluoroskopiebildern rekonstruiert wird. Die Basis hierfür ist ein statistisches Modell der gewünschten Struktur und mindestens ein Fluoroskopiebild. Die Idee liegt darin, das Modell zuerst unter Verwendung der rückprojizierten Konturen der Struktur, wie sie in den Fluoroskopiebildern zu finden sind, zu positionieren. Danach wird das Modell deformiert, und die Konturen des deformierten Modells werden mit den Konturen verglichen, die man im Fluoroskopiebild findet. Die Qualität der Übereinstimmung wird durch das Errechnen des Fehlers in der Differenz zwischen der Modellkontur und der Fluoroskopiebildkontur bestimmt. Die beiden Schritte werden wiederholt durchgeführt, d. h. es wird solange positioniert und "gemorpht", bis eine gute Übereinstimmung gefunden ist.

Der Nachteil dieser Methode liegt darin, dass der Übereinstimmungsgrad zwischen dem Modell und den Fluoroskopiebilddaten in dem dreidimensionalen Raum bestimmt wird, der das Modell umfasst. Solche Berechnungen sind sehr kompliziert und zeitaufwändig, was die praktische Anwendung beeinträchtigt. Ferner leidet die Genauigkeit daran, dass dieses Verfahren nur wenige Merkmale der Fluoroskopiebilder verwendet, nämlich nur die Konturlinien.

Es ist die Aufgabe der vorliegenden Erfindung ein Verfahren zur Bestimmung einer dreidimensionalen Form eines Körpers, insbesondere einer anatomischen Struktur, aus zweidimensionalen Projektionsbildern bereitzustellen, welches die oben genannten Nachteile des Standes der Technik überwindet. Insbesondere soll die Bestimmung praxisgerecht mit vertretbarem Zeit- und Rechenaufwand durchgeführt werden können und ein besser angepasstes Modell liefern, als dies bisher möglich war.

Diese Aufgabe wird erfindungsgemäß durch ein Verfahren gemäß dem Patentanspruch 1 gelöst. Die Unteransprüche zum Verfahren definieren bevorzugte Ausführungsformen der Erfindung. Die Erfindung betrifft ferner eine Vorrichtung zur Bestimmung einer dreidimensionalen Form eines Körpers, insbesondere einer anatomischen Struktur, aus zweidimensionalen Projektionsbildern gemäß dem Anspruch 12. Das erfindungsgemäße Verfahren sowie die erfindunsgemäße Vorrichtung können grundsätzlich alle hierin beschriebenen Merkmale einzeln oder in jedweder Kombination umfassen.

Das erfindungsgemäße Verfahren zur Bestimmung einer dreidimensionalen Form eines Körpers, insbesondere einer anatomischen Struktur, aus zweidimensionalen Projektionsbildern weist die folgenden Schritte auf:
- Erstellen von mindestens einem, vorzugsweise zwei oder mehreren Projektionsbildern des Körpers,
- Erstellen von entsprechenden Modell-Projektionsbildern aus einem generischen Modell des Körpers,
- Erstellen eines generischen Modells des Körpers,
- Eingeben der Körper-Projektionsbilder und der und des generischen Modellsin eine computergestützte Verarbeitungseinheit,
- Anpassung des generischen Modells an den Körper, wobei eine Anpassung der Form und, wenn notwendig, der Position des generischen Modells durchgeführt wird, und wobei die Beurteilung der Übereinstimmung des generischen Modells mit dem Körper nur auf zweidimensionaler Ebene, nämlich durch den Vergleich der Bildinhalte der Körper-Projektionsbilder mit den Modell-Projektionsbildern erfolgt, und
- Bestimmung der dreidimensionalen Form des Körpers aus dem angepassten generischen Modell.

Die Vorteile des erfindungsgemäßen Verfahrens beruhen unter anderem auf der Tatsache, dass die Übereinstimmung des generischen Modells mit dem Körper auf zweidimensionaler Ebene beurteilt wird. Wenn aus einem generischen Körpermodell Modell-Projektionsbilder erstellt werden, die zweidimensionaler Natur sind, kann diese Erstellung durch entsprechende Hard- oder Software sehr schnell durchgeführt werden, ebenso wie der Vergleich mit den - gleichfalls zweidimensionalen - Körper-Projektionsbildern zeit- und rechenoptimiert ablaufen kann. Dies führt sehr viel schneller zu einem Ergebnis als bei Rekonstruktionen bzw. Übereinstimmungsvergleichen im dreidimensionalen Raum, wie sie in der WO 01/22368 A1 vorgeschlagen werden. Ferner muss weniger teure Hardware eingesetzt werden.

Die Körper-Projektionsbilder können Röntgenbilder sein. Die Modell-Projektionsbilder können rekonstruierte Projektionsbilder, insbesondere digital rekonstruierte Röntgenbilder (digitally reconstructed radiographs = DRRs) sein, die aus Volumen- oder Oberflächendatensätzen für das Modell stammen. Die jeweiligen Eigenschaften und Vorteile der Verwendung von Volumen- oder Oberflächendatensätzen für das Modell werden im Weiteren noch detaillierter erläutert.

Gemäß einer Ausführungsform der Erfindung umfasst der Vergleich der Bildinhalte der Körper-Projektionsbilder und der Modell-Projektionsbilder den Vergleich von äußeren Konturen der Projektionsbilder und/oder Merkmalen der Projektionsbilder innerhalb der äußeren Konturen. Bevorzugt umfasst der Vergleich der Bildinhalte der Körper-Projektionsbilder und der Modell-Projektionsbilder den Vergleich von Tiefeninformationen in den Projektionsbildern. Durch die Verwendung der oben aufgezählten Bildinhalte bei der Anpassung des generischen Modells kann eine bessere Übereinstimmung mit dem realen Körper bzw. der realen anatomischen Struktur erzielt werden. Die Merkmale im Inneren der Kontur bzw. die Tiefeninformationen enthalten zusätzliche Kriterien. Die Erfindung hat erkannt, dass Projektionsbilder nicht nur Daten in einer Schnittebene liefern, wie zum Beispiel Konturdaten, sondern dass diese Bilder noch zusätzliche Informationen über die "Tiefe" aufweisen, die genutzt werden können, um die Anpassung des generischen Modells zu optimieren. Trotzdem können die Anpassung und der Vergleich der Bildinhalte auf zweidimensionaler Ebene erfolgen, was in der Praxis eine sehr viel schnellere Lösung erlaubt.

Bei der Erstellung der Körper-Projektionsbilder werden gemäß einer bevorzugten Ausführungsform der Erfindung deren Projektionsparameter bestimmt, insbesondere mittels eines Trackingsystems für den Körper und eines Aufnahmegerätes für die Körper-Projektionsbilder, um die entsprechenden Modell-Projektionsbilder zu erstellen. Solche Trackingsysteme oder Navigationssysteme können (optisch basierte) Patienten- und Geräte-Verfolgungssysteme sein, wie sie zum Beispiel eingangs zum Stand der Technik beschrieben worden sind.

Die Anpassung des generischen Modells kann erfindungsgemäß anhand einer statistischen Deformation erfolgen, sie kann aber auch zumindest teilweise interaktiv mit Hilfe von Benutzereingaben erfolgen, wobei ein Freiform-Deformationsmodell verwendet wird.

Zum Erstellen von entsprechenden Modell-Projektionsbildern kann ein generisches Oberflächendatensatzmodell verwendet werden, dessen Daten dann bei der Anpassung des Modells verwendet werden. Es besteht aber auch die Möglichkeit, ein generisches Volumendatensatzmodell zu verwenden. Ferner können Oberflächendatensatzmodelle und Volumendatensatzmodelle alternativ oder zusammen verwendet werden. Die Vorrichtung zur Bestimmung einer dreidimensionalen Form eines Körpers, insbesondere einer anatomischen Struktur, aus zweidimensionalen Projektionsbildern weist, allgemein gesprochen, ein Bilderzeugungsgerät sowie ein computergestütztes Daten- bzw. Bildverarbeitungsgerät auf, wobei letzteres Komponenten, nämlich Hard- oder Software-Komponenten, umfasst, welche die oben aufgeführten Schritte durchführen.

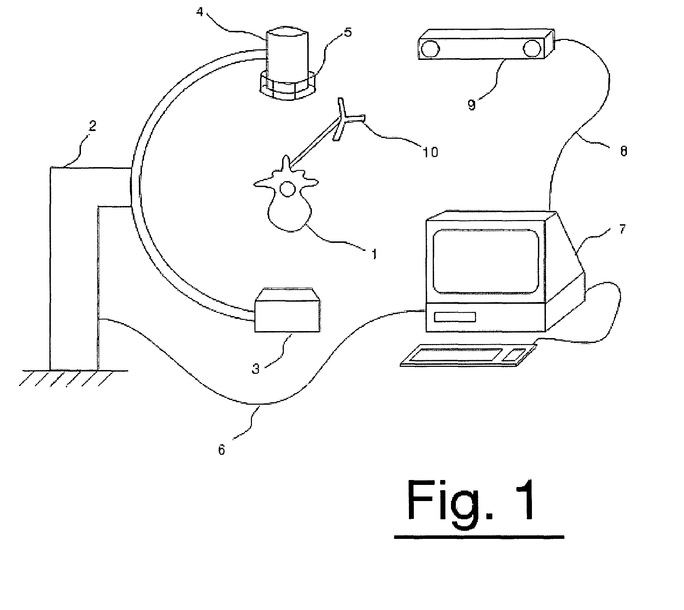

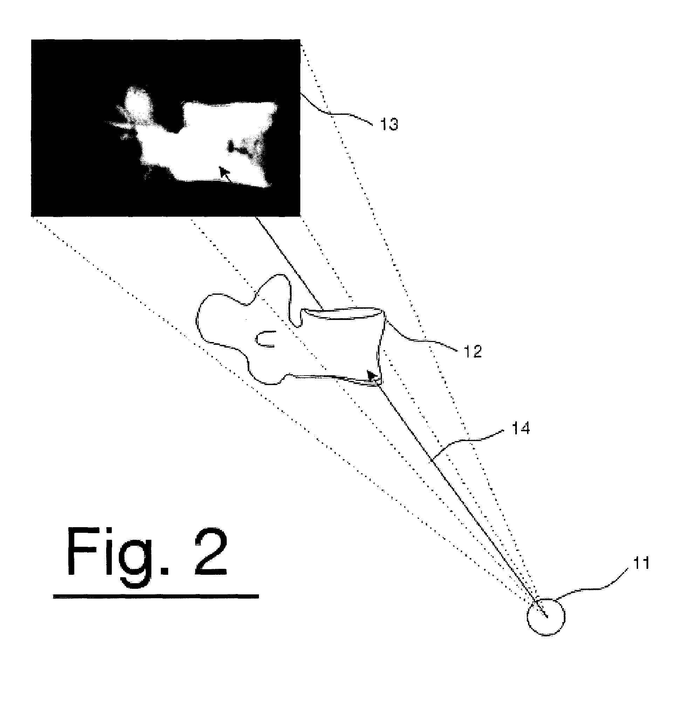

Die Erfindung wird im Weiteren näher erläutert. Hierzu wird unter anderem auf die beiden beiliegenden Zeichnungsblätter Bezug genommen, in denen die Figur 1 eine erfindungsgemäße Vorrichtung und die Figur 2 eine Prinzipskizze für ein digital rekonstruiertes Röntgenbild zeigt.

Vorab sollen nun diejenigen Erfindungsmerkmale, welche in den Zeichnungen dargestellt sind, erläutert werden. Die Figur 1 zeigt in schematischer Darstellung die Vorrichtungskomponenten, die bei einer interoperativen Anpassung eines statistischen Modells verwendet werden. Es wird eine (digitale) Röntgenaufnahme von einer realen Körperstruktur, hier von einem Wirbelkörper 1, gemacht. Am Wirbelkörper 1 befindet sich ein Referenzelement 10, mit dem die Raumlage des Wirbelkörpers 1 durch ein Trackingsystem bzw. ein medizinisches Navigationssystem erfasst werden kann. Das Trackingsystem ist schematisch durch eine Kameraanordnung 9 dargestellt, die über eine Datenleitung 8 mit einem Daten- bzw. Bildverarbeitungsgerät 7 verbunden ist, welches hier schematisch als Computer gezeigt ist. Mit dem Bezugszeichen 2 ist ein mobiles oder stationäres Bilderzeugungsgerät bezeichnet, das ein C-Bogen-Röntgengerät sein kann. Es weist eine Strahlungsquelle 3 auf, und am anderen Ende des C-Bogens einen Bildverstärker 4, der ebenfalls ein Referenzelement 5 trägt, welches den aufgenommenen Bildern Positionsinformationen hinzufügt. Die Bilddaten werden über die Datenleitung 6 ebenfalls zum Computer 7 übertragen.

Der Computer 7 weist unter anderem Bildverarbeitungs-Hard-/Software auf, eine CPU, sowie Datenspeicher und eine Bildschirmausgabe. Im Computer 7 sind auch die Daten des generischen Modells gespeichert, das mittels der Röntgenbilder, welche durch das Röntgengerät 2 erstellt werden, angepasst werden sollen, um die dreidimensionale Form des Wirbelkörpers 1 zu bestimmen.

Zu dieser Bestimmung werden, wie später noch detaillierter erläutert wird, digital rekonstruierte Röntgenbilder erstellt, welche den Röntgenbildern entsprechen, die durch das Röntgengerät 2 erstellt werden. Dabei wird über die Navigation bzw. das Trackingsystem sichergestellt, dass die Röntgenbilder des Wirbelkörpers 1 dieselben Projektionsparameter (zum Beispiel Ort der Strahlenquelle, Ort des Bildverstärkers, Strahlungsparameter) aufweisen wie die digital rekonstruierten Röntgenbilder (DRRs). Die Figur 2 zeigt die Erstellung eines solchen DRRs schematisch. Mittels einer virtuellen Strahlungsquelle 11 wird im Computer die Durchstrahlung des Wirbelkörpers 12 aus dem generischen Modell simuliert. Das Modell kann ein Oberflächenmodell oder ein Volumenmodell sein. Mit dem gepunktet dargestellten Strahlungsgang wird dann ein digital rekonstruiertes Röntgenbild 13 geschaffen. Mit dem Bezugszeichen 14 ist ein Beispielsstrahl angezeigt, der durch das Modell hindurchgeht, und mittels eines solchen Strahls bzw. mittels der Gesamtheit solcher Strahlen können auch Tiefeninformationen im DRR erhalten werden, bzw. Informationen über Merkmale innerhalb der Konturen des Modells.

Im Weiteren wird nun der technische Gehalt der Erfindung detailliert erläutert. Mit der Erfindung wird eine dreidimensionale Form aus den Informationen einer Anzahl von zweidimensionalen Projektionsbildern vorausgesagt bzw. bestimmt, beispielsweise aus mindestens einem Fluoroskopiebild. Dabei wird ein "Modell" der betrachteten Form (zum Beispiel ein Oberschenkelknochen oder ein Wirbelkörper) erzeugt. Dieses Modell kann statistisches Wissen über Variationen der Form in einem Querschnitt durch mehrere Muster aufweisen, wobei dies jedoch nicht unbedingt notwendig ist. Die Form kann entweder durch einen Oberflächendatensatz oder - wenn genauere Details der inneren Struktur ebenfalls von Bedeutung sind - durch einen Volumendatensatz repräsentiert werden, als auch durch eine Kombination von beidem. In jedem Fall wird eine "generische Form" der interessierenden Struktur zur Verfügung stehen.

Nunmehr müssen Formänderungen eincodiert werden, und zwar durch (die Änderung) vorzugsweise wenige(r) Formparameter. Diese Formparameter können beispielsweise die Variationsarten eines Punktverteilungsmodells sein. Sie könnten ebenfalls Knotenpunktpositionen von Freiform-Deformationsboxen sein, welche die Form umfassen.

Ferner werden die Bilder zumindest grob kalibriert. Die Projektionsparameter müssen teilweise oder vorzugsweise insgesamt bekannt sein. Dies wird durch Bilddaten ermöglicht, die über ein Bildtrackingsystem in ihrer Raumlage bestimmt werden können.

Nachdem die Körper-Projektionsbilder erstellt wurden und entsprechende Modell-Projektionsbilder aus dem generischen Modell erhalten werden konnten, wird das generische Modell in eine geeignete Ausgangsposition gebracht, worauf die Körper-Projektionsbilder (fluoroskopische Bilder) mit den Modell-Projektionsbildern (DRRs) verglichen werden, die aus dem generischen Modell gerendert wurden. Die Position des Modells wird, wenn notwendig korrigiert, d. h. die DRRs und die Fluoroskopiebilder werden durch Drehen und Verschieben aneinander angeglichen. Ein weiterer Schritt beinhaltet die Korrektur der Modellform, wobei die DRRs und die Fluoroskopiebilder weiter aneinander angeglichen werden, indem die Formparameter geändert werden. Die Erzeugung der DRRs kann entweder software-basiert oder hardware-basiert durchgeführt werden, wenn das generische Modell aus einem Volumendatensatz besteht. Besteht das Modell aus einem Oberflächendatensatz, kann ein DRR-ähnliches Bild schnell gerendert werden, wobei Oberflächenmodelle als DRR-Bilder auf Standard-Graphik-Hardware gerendert werden.

Die Positionskorrektur und die Formkorrektur für das Modell können entweder manuell oder automatisch durchgeführt werden. Ferner können Sie entweder in Abfolge, nacheinander oder kombiniert (gleichzeitig) durchgeführt werden.

Die Erfindung gestattet ebenfalls das Umschalten zwischen Oberflächenmodell- und Volumendaten-Verarbeitung zu jeder Zeit während der Verarbeitung. Beispielsweise könnte der erste Teil der Anpassung unter Verwendung des schnelleren Oberflächenmodells durchgeführt werden. Nachdem eine ausreichende Genauigkeit erzielt worden ist, kann das Resultat unter Verwendung der Volumendaten verbessert werden. Wenn ein interaktiver Modus gewünscht ist, wäre das Oberflächenmodell wohl die bessere Wahl, und die resultierende Deformation kann danach auf die Volumendaten angewendet werden.

Eine rein intuitive Deformierung eines statistischen Modells ist schwer durchführbar. Um dieses Problem zu überwinden, kann ein Ansatz gewählt werden, bei dem eine Freiform-Deformation verwendet wird, um das Modell interaktiv oder automatisch zu deformieren. Diese Deformation kann in statistische Deformations-Informationen umgewandelt werden, was ein Umschalten zwischen der statistikbasierten Deformation und einer Freiform-Deformation zu jedem Zeitpunkt gestattet. Der Vorteil liegt hier darin, dass der Verwender beispielsweise durch intuitive Freiform-Deformationen eine anfängliche Deformation bereitstellen könnte, welche dann als Ausgangspunkt für die statistische, automatische Anpassung benutzt werden kann. Es können auch Mittel bereitgestellt werden, um die Resultate des automatischen Anpassungsverfahrens danach oder zu jedem Zeitpunkt im Anpassungsprozess zu verbessern.

Die Erfindung verwendet vorteilhafterweise die DRRs, die aus dem Modell generiert werden, um sie mit Fluoroskopiebildern zu vergleichen. Dies wird in einer besseren Anpassung resultieren, da die Tiefeninformationen in den Fluoroskopiebildern ebenfalls verwendet werden kann. Wenn diese zusätzliche Information ignoriert wird, werden möglicherweise mehr Bilder benötigt, da die Konturen alleine nicht unbedingt genügend Informationen bereitstellen (abhängig vom Winkel der Fluoroskopiebilder und der betreffenden Struktur).

Das Modell kann automatisch an die Fluoroskopiebilder angeglichen werden. Dies umfasst das "Morphen" des Modells und seine korrekte Positionierung. Landmarken können erfasst oder manuell positioniert werden, und das resultierende Modell kann unter Verwendung einer automatischen Registrierung und eines Morphing-Algorithmus einem Fein-Tuning unterzogen werden. Es ist ebenfalls möglich nur die DRR-Fluoroskopie-Angleichung zu verwenden , um das Modell ohne ein Eingreifen des Anwenders zu morphen und zu positionieren.

Es gibt DRR-Rekonstruktionsmethoden, die einen Tetraeder-Ansatz verwenden, um die Volumendaten zu modellieren. Die einzelnen Tetraeder werden verwendet, um die verschiedenen Typen von Knochenstrukturen zu repräsentieren. Die Idee besteht darin, die Menge an Daten zu reduzieren, die notwendig ist, um das Volumen darzustellen, wobei dennoch dieselbe Information bereitgestellt wird. Auch diese Idee kann erfindungsgemäß umgesetzt werden.

Ansonsten könnten die unterschiedlichen Knochendichten unter Verwendung unterschiedlicher Schichten im Oberflächenmodell angenähert werden. Der Hauptvorteil liegt hier darin, dass alles unter Verwendung herkömmlicher Graphikkarten ohne spezielle Verarbeitungsanforderungen gemorpht und gerendert werden kann. Die benötigten zusätzlichen Schichten, um das Oberflächenmodell genauer zu machen, können automatisch durch das Segmentieren zusätzlicher Iso-Oberflächen oder auch durch Skalieren des Modells erzeugt werden.

## Patentansprüche

1. Verfahren zur Bestimmung einer dreidimensionalen Form eines Körpers, insbesondere einer anatomischen Struktur, aus zweidimensionalen Projektionsbildern mit den folgenden Schritten:
- Erstellen von mindestens einem, vorzugsweise zwei oder mehreren Projektionsbildem des Körpers,
- Erstellen von entsprechenden Modell-Projektionsbildern aus einem generischen Modell des Körpers,
- Eingeben der Körper-Projektionsbilder und des generischen Körpermodells in eine computergestützte Verarbeitungseinheit,
- Anpassung des generischen Modells an den Körper, wobei eine Anpassung der Form und, wenn notwendig, der Position des generischen Modells durchgeführt wird, und wobei die Beurteilung der Übereinstimmung des generischen Modells mit dem Körper nur auf zweidimensionaler Ebene, nämlich durch den Vergleich der Bildinhalte der Körper-Projektionsbilder mit den Modell-Projektionsbildern erfolgt, und
- Bestimmung der dreidimensionalen Form des Körpers aus dem angepassten generischen Modell.

2. Verfahren nach Anspruch 1, bei dem als Körper-Projektionsbilder Röntgenbilder verwendet werden.

3. Verfahren nach Anspruch 1 oder 2, bei dem als Modell-Projektionsbilder rekonstruierte Projektionsbilder, insbesondere digital rekonstruierte Röntgenbilder (Digitally Reconstructed Radiographs = DRRs) verwendet werden, die aus Volumen- oder Oberflächendatensätzen für das Modell stammen.

4. Verfahren nach einem der Ansprüche 1 bis 3, bei dem der Vergleich der Bildinhalte der Körper-Projektionsbilder und der Modell-Projektionsbilder den Vergleich von äußeren Konturen der Projektionsbilder und/oder Merkmalen der Projektionsbilder innerhalb der äußeren Konturen umfasst.

5. Verfahren nach einem der Ansprüche 1 bis 4, bei dem der Vergleich der Bildinhalte der Körper-Projektionsbilder und der Modell-Projektionsbilder den Vergleich von Tiefeninformationen in den Projektionsbildern umfasst.

6. Verfahren nach einem der Ansprüche 1 bis 5, bei dem bei der Erstellung der Körper-Projektionsbilder deren Projektionsparameter bestimmt werden, insbesondere mittels eines Trackingsystems für den Körper und das Aufnahmegerät für die Körper-Projektionsbilder, um die entsprechenden Modell-Projektionsbilder zu erstellen.

7. Verfahren nach einem der Ansprüche 1 bis 6, bei dem die Anpassung des generischen Modells automatisch anhand einer statistischen Deformation erfolgt.

8. Verfahren nach einem der Ansprüche 1 bis 7, bei dem die Anpassung zumindest teilweise interaktiv mit Hilfe von Benutzereingaben erfolgt, wobei ein Freiform-Deformationsmodell verwendet wird.

9. Verfahren nach einem der Ansprüche 1 bis 8, bei dem beim Erstellen von entsprechenden Modell-Projektionsbildern ein generisches Oberflächendatensatzmodell verwendet wird, dessen Daten dann bei der Anpassung des Modells verwendet werden.

10. Verfahren nach einem der Ansprüche 1 bis 8, bei dem beim Erstellen von entsprechenden Modell-Projektionsbildern ein generisches Volumendatensatzmodell verwendet wird, dessen Daten dann bei der Anpassung des Modells verwendet werden.

11. Verfahren nach einem der Ansprüche 1 bis 8, bei dem beim Erstellen von entsprechenden Modell-Projektionsbildern ein generisches Oberflächendatensatzmodell und ein generisches Volumendatensatzmodell verwendet werden, deren Daten dann bei der Anpassung des Modells alternativ oder zusammen verwendet werden.

12. Vorrichtung zur Bestimmung einer dreidimensionalen Form eines Körpers (1), insbesondere einer anatomischen Struktur, aus zweidimensionalen Projektionsbildern mit
- einem Bilderzeugungsgerät, insbesondere einem vorzugsweise digitalen Röntgengerät (2, 3, 4, 5) zur Erstellung von mindestens einem, vorzugsweise zwei oder mehreren Projektionsbildern des Körpers, und mit
- einem computergestützten Daten- bzw. Bildverarbeitungsgerät (7) zum Erstellen von den Körper-Projektionsbildern entsprechenden Modell-Projektionsbildern aus einem generischen Modell des Körpers, wobei die Körper-Projektionsbilder und die Modell-Projektionsbilder mittels Datentransfereinrichtungen (6) in das Daten- bzw. Bildverarbeitungsgerät eingegeben werden, **dadurch gekennzeichnet, dass**
- das Daten- bzw. Bildverarbeitungsgerät (7) eine Komponente aufweist zur Anpassung des generischen Modells an den Körper, wobei eine Anpassung der Form und, wenn notwendig, der Position des generischen Modells durchgeführt wird, und wobei die Beurteilung der Übereinstimmung des generischen Modells mit dem Körper nur auf zweidimensionaler Ebene, nämlich durch den Vergleich der Bildinhalte der Körper-Projektionsbilder mit den Modell-Projektionsbildern erfolgt, und dass
- das Daten- bzw. Bildverarbeitungsgerät (7) eine Komponente aufweist zur Bestimmung der dreidimensionalen Form des Körpers aus dem angepassten generischen Modell.
